# EUROPÄISCHE PATENTANMELDUNG

(11) **EP 1 037 150 A2**
(43) Veröffentlichungstag der Anmeldung: **20.09.2000**
(21) Anmeldenummer: 00101751.6
(22) Anmeldetag: 28.01.2000
(51) Int. Cl.: G06F 13/374

(54) **Verfahren zum Verwalten des Zugriffs auf einen Bus und Bussystem**

(30) Priorität: 17.03.1999 DE 19911830
(71) Anmelder: ROBERT BOSCH GMBH, 70442 Stuttgart (DE)
(72) Erfinder: Leuwer, Herbert, 71522 Backnang (DE)

(57) **Zusammenfassung**

Um die Verwaltung des Zugriffs mehrerer konkurrierender Terminals (1,2) auf einen Bus (6) zu vereinfachen, beginnt jedes Terminal (1,2), das Daten auf dem Bus zu senden oder vom Bus zu empfangen hat, ein für es charakteristisches Identifikationswort auf einer Arbitrierungsleitung (12₁,12₂) auszusenden, wobei die ausgesendeten Bits einen dominanten oder einen rezessiven Wert haben können, und falls ein Terminal einen dominanten Wert auf der Arbitrierungsleitung (12₁,12₂) während des Aussendens feststellt, bricht es das Aussenden ab. So gelingt es in jeder Rahmentaktperiode nur einem Terminal, sein Identifikationswort vollständig zu senden und bei einer Zentraleinheit eine Genehmigung zum Senden auf dem Bus oder den Empfang von Daten über den Bus anzufordern.

## Beschreibung

Die Erfindung betrifft ein Verfahren zum Verwalten des Zugriffs mehrerer konkurrierender Terminals als Sender und/oder Empfänger von Datenpaketen auf einen Bus sowie ein Bussystem, das in der Lage ist, eine große Zahl von konkurrierenden Sendern und/oder Empfängern unter Ausnutzung der zur Verfügung stehenden Übertragungsbandbreite zu verwalten.

Ein wichtiges Beispiel für derartige Systeme sind ATM (Asynchronous transfer mode)-Systeme. In einem solchen System wird zur Übertragung von ATM-Zellen zwischen der ATM-Schicht und den Ports der physikalischen Schicht heute nahezu durchgängig das standardisierte UTOPIA-Bussystem eingesetzt. Eine Spezifikation dieses Bussystems wurde vom ATM-Forum Technical committee unter der Bezeichnung UTOPIA-level 2, af-phy0039.000 im Juni 1995 herausgegeben.

Das UTOPIA-Bussystem ist ausschließlich für die Verwendung als lokales Verbindungsmedium zwischen physikalischer Schicht und ATM-Schicht innerhalb einer Leiterkarte ausgelegt. Dieses System sieht unter anderem eine Zentraleinheit vor, die entsprechend ihren zwei wichtigsten Aufgaben, dem Routen von ATM- Zellen durch das System und dem Verwalten des Zugriffs auf den Bus durch eine Mehrzahl sogenannter Ports als aus zwei Teilen, einem Zellprozessor und einem Bus Arbiter, bestehend aufgefaßt werden kann. Dabei können die Ports Quellen oder Senken von auf dem Bus zu übertragenden Daten darstellen. Eine Übertragung vom Port auf den Bus wird als Upstream-Übertragung, eine Übertragung in umgekehrter Richtung als Downstream-Übertragung bezeichnet. Jeder Port umfaßt einen Zellspeicher für Upstream- und Downstream-Übertragung. Die Zentraleinheit fragt zyklisch den Zustand der Zellspeicher für beide Übertragungsrichtungen in den Ports ab. Für jede solche Abfrage werden zwei Taktzyklen des Bussystems benötigt. Eine ATM-Zelle umfaßt 53 Byte, die sukzessive übertragen werden. Somit können während der zum Übertragen einer Zelle auf einem 8 Bit breiten Bus benötigten Zeit maximal 26 Ports vom Zellprozessor abgefragt werden. Um diese eindeutig zu adressieren, sind Adressen mit einer Breite von 5 Bit erforderlich; breitere Adressen sind nicht vorgesehen. Der Adressraum von UTOPIA umfaßt somit maximal 2⁵=32 Ports.

Bei Verwendung eines sechzehn Bit breiten Busses verringert sich die Zahl der adressierbaren Ports je Abfrageleitung auf die Hälfte, weil eine Zelle in der halben Zahl (=27) von Taktzyklen übertragen wird.

Die zyklische Abfrage der Ports durch die Zentraleinheit des UTOPIA-Systems erfordert einen beträchtlichen Signalisierungsaufwand, der, wenn die Signalisierungsinformation über den Datenbus übertragen werden müßte, wertvolle Übertragungsbandbreite kosten würde. Um dies zu vermeiden, werden Kontrallsignale bei UTOPIA in einer sternförmigen Verdrahtung übertragen, die von dem die Zellen Übertragenden Datenbus verschieden ist.

Das Abfrageverfahren ist daher ein erhebliches Hindernis, das der Erweiterung von UTOPIA-Systemen auf mehr als 26 Ports entgegensteht.

Ein Zellbussystem zur Verbindung von Teilnehmer-Schnittstellen-Baugruppen, sogenannten Service-Units SU, mit einem zentralen Zellprozessor CP stellt das VME-Subsystem 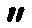 ATM BUS (AB) an VME" dar, spezifiziert in der gleichnamigen Veröffentlichung der VITA Standards Organization, Scottsdale, Arizona, USA. Dieser Zellbus definiert Mechanismen zur Signalisierung wie Multicast und Broadcast-Nachrichtenversand. Allerdings ist er funktional in der ATM-Schicht angesiedelt und unterstützt maximal 32 sogenannte Terminals, die mit den oben angegebenen Service-Units gleichzusetzen sind. Einem Terminal können mehrere Ports der physikalischen Schicht angehören, doch tauchen diese im Zellbuskonzept nicht als adressierbare Objekte auf. Daher stößt auch bei diesem Bussystem eine Erweiterung auf mehr als 32 adressierbare Sender und/oder Empfänger an einem Bus auf Schwierigkeiten.

### Vorteile der Erfindung

Durch die Erfindung wird ein Verfahren zum Verwalten des Zugriffs mehrerer konkurrierender Sender-/Empfänger-Terminals auf einen Bus geschaffen, das als Erweiterung des UTOPIA-Bussystems auf eine große Zahl von angeschlossenen Terminals einsetzbar ist, und das dabei den hohen signalisierungsaufwand vermeidet, der beim UTOPIA-System für die fortlaufende Abfrage angeschlossener Ports unerläßlich ist.

Dieser Vorteil wird erreicht mit Hilfe eines Wettbewerbsverfahrens, wie in Anspruch 1 definiert, bei dem jedes der Terminals, das Daten auf dem Bus zu senden oder vom Bus zu empfangen hat, versucht, ein für das betreffende Terminal charakteristisches Identifikationswort auf einer Arbitrierungsleitung zu senden. Ein auf der Arbitrierungsleitung gesendetes Bit kann einen dominanten oder einen rezessiven Wert haben. Das Senden des Identifikationsworts beginnt mit dem Senden des ersten Bits. Wenn dieses den rezessiven Wert hat und die Arbitrierungsleitung während des Sendens dieses Bits den dominanten Wert annimmt, erkennt ein sendendes Terminal, daß noch ein anderes Terminal vorhanden ist, das Daten über den Bus übertragen muß, und gibt den Wettbewerb auf, indem es das Aussenden seines Identifikationsworts abbricht. Wenn der Wert auf der Arbitrierungsleitung nicht vom gesendeten Bit abweicht, sendet das Terminal solange weitere Bits seines Identifikationsworts, bis es aufgrund einer Abweichung zwischen gesendetem Bit und Wert der Arbitrierungsleitung den Wettbewerb aufgibt oder aber das Identifikationswort vollständig ausgesendet ist. Ein Terminal, dem es gelungen ist, sein Identifikationswort vollständig auszusenden, kann anschließend einen Datenblock über den Bus übertragen.

Im einfachsten Fall kann vorgesehen werden, daß ein Terminal, das sein Identifikationswort vollständig ausgesendet hat, in einem nachfolgenden Zeitrahmen einen Datenblock über den Bus sendet oder empfängt. Dies bedeutet, daß sich die Terminals durch das Wettbewerbsverfahren untereinander für jeden zu übertragenden Datenblock einzeln einigen, welches Terminal Zugriff auf den Bus erhält. Eine Zentraleinheit des Bussystems kann in einem solchen Fall ohne Bus Arbiter, der die Zugriffsrechte auf den Bus des Terminals zuweist, auskommen; es wird dann nur ein Zellprozessor benötigt, dessen Aufgabe es ist, für ein Terminal, das zum Empfang von dem Bus berechtigt ist, eine für dieses Terminal bestimmte Zelle auf dem Bus bereitzustellen.

Die Verwendung eines Bus Arbiters hat allerdings den Vorteil, daß darin Bedienanforderungen von Terminals zeitweilig gepuffert werden können, so daß der Wettbewerb um Zugang zum Bus nicht um jeden einzelnen zu übertragenden Block ausgetragen werden muß.

Der Bedarf eines Terminals, Daten auf dem Bus zu senden oder vom Bus zu empfangen, wird festgestellt, wenn das Terminal von einer externen Datenleitung eine Datenzelle empfangen hat oder wenn ein Sendepuffer des Terminals, der zum Senden von Zellen auf der externen Datenleitung dient, in der Lage ist, eine Zelle aufzunehmen. Jedes Terminal nimmt also am Wettbewerbsverfahren nur teil, wenn es tatsächlich Übertragungsbedarf besitzt.

Nachdem ein Terminal sein Identifikationswort vollständig ausgesendet hat, unternimmt es keinen erneuten Aussendeversuch.

Die Terminals können jeweils eine Mehrzahl von Ports umfassen, die jeweils eigenständige Quellen beziehungsweise Senken von auf dem Bus zu übertragenden Daten darstellen. Diese Ports treten nicht wie die Terminals untereinander in Wettbewerb um die Zugriffsrechte. Daher ist in diesem Fall eine Zentraleinheit mit Bus Arbiter-Funktion erforderlich, die Zugriffsrechte auf den Bus einem Port desjenigen Terminals, das den Wettbewerb unter den Terminals gewonnen hat, aktiv zuweist. Zu diesem Zweck sendet das betreffende Terminal der Zentraleinheit eine Bedienanforderung, die wenigstens einen Port des Terminals spezifiziert, der Quelle beziehungsweise Senke der auf dem Bus zu übertragenden Daten ist, und wartet eine Sendebeziehungsweise Empfangsgenehmigung von der Zentraleinheit ab, die denjenigen Port angibt, der Daten auf dem Bus senden oder empfangen soll. Im Falle des Empfangens von Daten vom Bus können auch mehrere Ports in der Empfangsgenehmigung gleichzeitig angegeben werden.

Bedienanforderung und Sende- beziehungsweise Empfangsgenehmigung werden - anders als das Identifikationswort - vorzugsweise auf dem Bus übertragen.

Vorzugsweise ist in der Bedienanforderung jedem Port des Terminals ein Bit zugeordnet, und durch den Status des Bits wird spezifiziert, ob der Port Übertragungsbedarf hat, das heißt Quelle oder Senke von Daten sein soll, oder nicht. Auf diese Weise ist es für ein Terminal möglich, in einer einzigen Bedienanforderung den gesamten Übertragungsbedarf sämtlicher angehörigen Ports zu melden. Es ist dann Sache der Zentraleinheit, zu entscheiden, welchem Port zu einem gegebenen Zeitpunkt welche Art von Genehmigung (Senden oder Empfangen) zugeteilt wird.

Bei der von der Zentraleinheit ausgegebenen Sendebeziehungsweise Empfangsgenehmigung ist die Situation anders: Das Recht, auf dem Bus zu senden, darf zu einem gegebenen Zeitpunkt immer nur genau einem Port erteilt werden. Deswegen ist zweckmäßigerweise jedem Port des Terminals eine nachfolgend als Index bezeichnete Nummer zugeordnet, und durch Übertragen dieses Index in der Sende- beziehungsweise Empfangsgenehmigung gibt die Zentraleinheit an, welcher der Ports eines Terminals auf dem Bus senden beziehungsweise empfangen darf.

Die zeitliche Steuerung des Verfahrens erfolgt zweckmäßigerweise mit Hilfe eines Rahmentaktsignals, wobei jede Zelle innerhalb einer Periode des Rahmentaktsignals übertragen wird. Ein Terminal, das in einer Periode des Rahmentaktsignals den Wettbewerb um Zugriffsrecht auf den Bus aufgegeben hat, unternimmt zweckmäßigerweise in einer folgenden Periode des Rahmentaktsignals einen erneuten Versuch, sein Identifikationswort zu senden, solange, bis dieser Versuch Erfolg hat.

Zum Aussenden des Identifikationsworts kann in jeder Periode des Rahmentaktsignals eine von i Arbitrierungsleitungen im zyklischen Wechsel benutzt werden, wobei i wenigstens zwei ist. Dies ist insbesondere dann sinnvoll, wenn das Aussenden eines Identifikationsworts mehr Zeit benötigt, als in einer Rahmentaktperiode zur Verfügung steht.

Das Identifikationswort sollte einen oder mehrere der folgenden Abschnitte umfassen: 1. einen Abschnitt, der die Priorität des Terminals angibt, 2. einen sogenannten Fairnessabschnitt, dessen Wert jeweils beim Übertragen eines Datenblocks von oder zu dem Terminal inkrementiert wird, und 3. die Adresse des Terminals. Diese Abschnitte werden vorzugsweise in der Reihenfolge 1-2-3 ausgesendet. Dadurch ist sichergestellt, daß von mehreren Terminals unterschiedlicher Priorität immer eines mit der höchsten Priorität im Wettbewerb erfolgreich ist. Durch Verändern, insbesondere Inkrementieren, des Fairnessabschnitts nach erfolgreichem Übertragen eines Pakets ist sichergestellt, daß ein Wettbewerb unter mehreren Terminals gleicher Priorität von allen Terminals im Wechsel gewonnen wird.

Wenn auf dem Bus während einer festgelegten Zeitspanne, zum Beispiel einer festgelegten Zahl von Rahmenperioden, keine Zellen übertragen worden sind, können die Fairnessabschnitte aller Terminals auf einen Anfangswert, vorzugsweise 0, gesetzt werden. Dadurch wird vermieden, daß Terminals mit geringer Übertragungshäufigkeit und dementsprechend geringer Häufigkeit von Inkrementierungen lange in einem Zustand mit ungünstigem Wert des Fairnessabschnitts verharren und so bei der Übertragung periodisch benachteiligt werden.

Die Angabe der Adresse des Terminals im Identifikationswort dient zum einen dazu, sicherzustellen, daß der Wettbewerb immer von genau einem Terminal gewonnen wird, außerdem ermöglicht das Aussenden der Adresse es der Zentraleinheit, diese Adresse auf der Arbitrierungsleitung zu empfangen und daraufhin in ihrer Sendebeziehungsweise Empfangsgenehmigung das Terminal anzugeben, für das die Genehmigung bestimmt ist.

Die Möglichkeit, eine große Zahl von Sendern und/oder Empfängern in Gestalt von Terminals oder Ports an ein Bussystem anzuschließen und mit geringem Signalisierungsaufwand zu verwalten, ergibt sich auch bei einem Bussystem für die Paketdatenübertragung mit wenigstens einer Paketdatenleitung, wenigstens einer Arbitrierungsleitung und einer Mehrzahl von Terminals, die an die wenigstens eine Paketdatenleitung zum Senden und/oder Empfangen von Datenpaketen und an die wenigstens eine Arbitrierungsleitung zum seriellen Aussenden eines Identifikationsworts, das für das betreffende Terminal charakteristisch ist, angeschlossen sind, wobei die Terminals einen dominanten Zustand der Arbitrierungsleitung herbeiführen, wenn wenigstens eines der Terminals ein dominantes Bit aussendet, und einen rezessiven Zustand herbeiführen, wenn jedes Terminal ein rezessives Bit aussendet, und jedes Terminal eingerichtet ist, um nur dann ein Datenpaket zu senden beziehungsweise zu empfangen, wenn alle Bits seines Identifikationsworts gesendet worden sind, ohne daß beim Aussenden eines rezessiven Bits ein dominanter Zustand der Arbitrierungsleitung aufgetreten ist. Dieses Bussystem kann ferner eine Zentraleinheit umfassen, die an die Paketdatenleitung angeschlossen ist, um eine vom Terminal gesendete Bedienanforderung zu empfangen und Sende- beziehungsweise Empfangsgenehmigungen an das Terminal zu vergeben.

Diese Zentraleinheit sollte zweckmäßigerweise ein Speicherelement zum Speichern von unbeantworteten Bedienanforderungen, das heißt Bedienanforderungen, auf die noch keine Sendegenehmigung vergeben worden ist beziehungsweise angeforderte Daten noch nicht an das anfordernde Terminal geschickt worden sind, besitzen. Dies ermöglicht es ihr, Sendegenehmigungen mit Verzögerung zu vergeben beziehungsweise Anforderungen von Daten mit Verzögerung zu bearbeiten. Ein Terminal, das eine Bedienanforderung gesendet hat, kann daher sicher sein, über kurz oder lang eine Sendegenehmigung oder seine angeforderten Daten zu erhalten, und braucht seine Anforderung nicht mehrfach zu wiederholen.

Das Speicherelement umfaßt zweckmäßigerweise zwei getrennte Wartepuffer für Sende- und Empfangsbedienanforderungen. Dadurch ist es möglich, Upstream- und Downstream-Übertragung jeweils unterschiedliche Übertragungsbandbreiten zuzuordnen, was bei Anwendungen mit stark unterschiedlichem Übertragungsbedarf in Upstreambeziehungsweise Downstreamrichtung wie etwa Video on Demand zweckmäßig ist. Ferner ist eine Unterteilung der Wartepuffer in Teilpuffer für Bedienanforderungen jeweils unterschiedlicher Priorität sinnvoll. Diese Unterteilung ermöglicht es, verschiedenen auf dem Bussystem übertragenen Diensten unterschiedliche Übertragungsbandbreiten nach Bedarf zuzuordnen.

Weitere Merkmale und Vorteile der Erfindung ergeben sich aus der nachfolgenden Beschreibung von Ausführungsbeispielen mit Bezug auf die Figuren.
- Figur 1: zeigt schematisch die Struktur des erfindungsgemäßen Bussystems;
- Figur 2: zeigt den Aufbau eines Identifikationswortes eines Terminals;
- Figur 3: den zeitlichen Ablauf des Verfahrens zur Verwaltung des Zugriffs auf den Bus bei einer Upstream-Übertragung;
- Figur 4: den zeitlichen Ablauf des Verwaltungsverfahrens bei einer Downstream-Übertragung;
- Figur 5: den Aufbau eines auf dem Bus übertragenen Datenpakets;
- Figur 6: den Aufbau eines Cellbus-Routing-Header des Pakets aus Figur 5;
- Figur 7: den zeitlichen Verlauf von Signalen bei der Übertragung eines Pakets auf dem Bus;
- Figur 8: die zeitlich überlappende Aussendung von Identifikationswörtern auf zwei Arbitrierungsleitungen;
- Figur 9: eine schematische Darstellung des Aufbaus eines Terminals des Bussystems; und
- Figur 10: eine schematische Darstellung des Aufbaus einer Zentraleinheit des Bussystems.

### Beschreibung von Ausführungsbeispielen

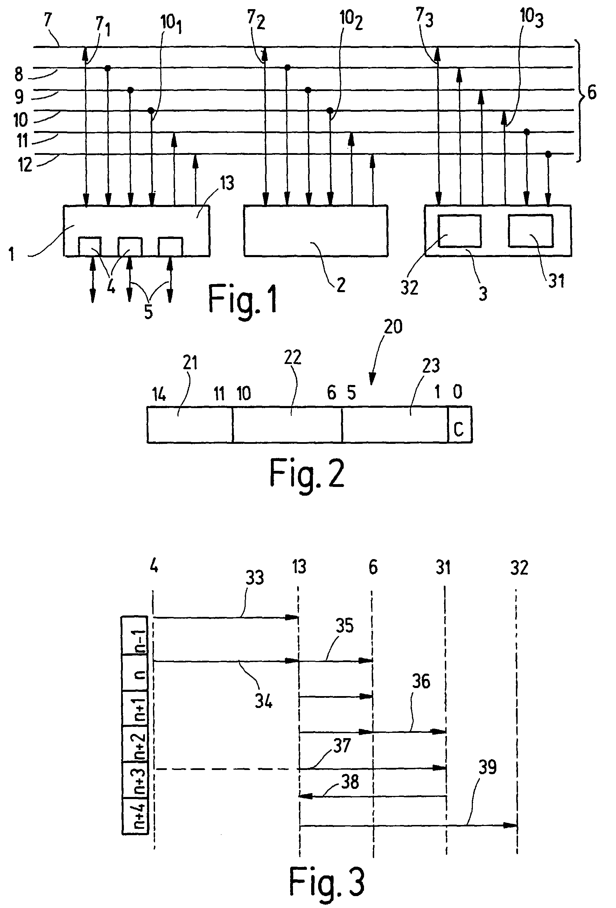

Figur 1 zeigt sehr schematisch ein erfindungsgemäßes Bussystem mit einer Mehrzahl von Terminals, von denen zwei Stück 1,2 in der Figur dargestellt sind, und einer Zentraleinheit 3. Auf den Aufbau der Terminals und der Zentraleinheit wird an späterer Stelle genauer eingegangen. Ein typisches Terminal 1 umfaßt ein oder mehrere Ports, die der physikalischen Schicht eines ATM-Übertragungssystems angehören und über externe Leitungen 5 mit entsprechenden, entfernten Ports (nicht dargestellt) für den Datenaustausch mit diesen verbunden sind, und einen sogenannten Bus Client 13, der die Übergabe von Zellen zwischen den Ports und einem Bus 6 regelt. Der Bus Client 13 gehört ebenfalls der physikalischen Schicht des ATM-Protokoll-Schichtenmodells an.

Der Bus 6, über den die Terminals 1, 2 und die Zentraleinheit 3 kommunizieren, umfaßt eine Vielzahl von Leitungen unterschiedlicher Funktion. Der Bus 6 ist für die Datenübertragung im Paketbetrieb konzipiert und umfaßt 32 parallele Paketdatenleitungen 7, auf die Terminals 1,2 und Zentraleinheit 3 lesend und schreibend zugreifen können, wie durch die Pfeile 7₁,7₂,7₃ angedeutet. Die Zentraleinheit 3 ist in einen Zellprozessor 32 und einen Bus Arbiter 31 untergliedert. Der Arbiter 31 verwaltet den Zugriff auf den Bus durch die Terminals und den Zellprozessor 32; der Zellprozessor empfängt, verarbeitet und sendet ATM-Zellen auf dem Bus 6.

Für die zeitliche Steuerung des Paketbetriebs werden drei Taktsignalleitungen des Busses 6 benutzt, eine Lese- oder Empfangstaktsignalleitung 8, eine Schreib- oder Sendetaktsignalleitung 9 und eine Rahmentaktsignalleitung 10. Die Taktsignale auf diesen drei Leitungen werden jeweils von der Zentraleinheit 3 zur Verfügung gestellt und von den Terminals 1,2 empfangen, wie zum Beispiel durch die Pfeile 10₁,10₂,10₃ für das Rahmentaktsignal angedeutet. Eine Quittungsleitung 11 und zwei Arbitrierungsleitungen 12 dienen der Übertragung von Steuerinformation von den Terminals 1,2 zur Zentraleinheit 3.

Jedes Terminal 1,2, das zu Beginn eines vom Rahmentaktsignal auf der Leitung 10 festgelegten Rahmens Daten auf dem Bus 6 zu senden oder von dort zu empfangen hat, beginnt damit, auf einer der Arbitrierungsleitungen 12 ein für das betreffende Terminal charakteristisches Identifikationswort 20 zu senden, dessen Aufbau in Figur 2 dargestellt ist. Das Identifikationswort 20 umfaßt drei Abschnitte, darunter einen Prioritätsabschnitt 21 aus vier Bits, die eine Priorität des sendenden Terminals angeben. Die Priorität ist in Abhängigkeit von der physikalisch möglichen Datenrate der an ein Terminal angeschlossenen Datenleitung 5 festgelegt. Je höher die Datenrate, desto höher die Priorität. Dies macht es möglich, bereits auf der physikalischen Schicht des ATM-Protokolls echtzeitkritische Daten wie etwa Sprachdaten eines Telefongesprächs mit höherer Priorität zu übertragen als zum Beispiel Internet-Daten oder Daten ähnlicher DFÜ-Dienste, indem für diese Leitungen mit unterschiedlicher Rate verwendet werden.

Ein daran anschließender Abschnitt von fünf Bits wird als Fairnessabschnitt 22 bezeichnet. Dieser Abschnitt gibt den Stand eines internen Zählers des Terminals wieder. Seine Funktion wird bei der nachfolgenden Beschreibung des auf Grundlage des Identifikationsworts 20 stattfindenden Wettbewerbs um Zugriffsrechte auf den Bus zwischen einzelnen Terminals deutlich.

Ein dritter Abschnitt des Identifikationsworts 20, als Adreßabschnitt 23 bezeichnet, gibt die Adresse des Terminals innerhalb des Bussystems an.

Die Ausgangsstufe eines jeden Terminals, über das dieses das Identifikationswort sendet, ist so konstruiert, daß von den zwei logischen Zuständen, die die Arbitrierungsleitung 12 zu einem gegebenen Zeitpunkt annehmen kann, einer dominant und einer rezessiv ist. Dies bedeutet, daß die Arbitrierungsleitung den dominanten Zustand annimmt, wenn wenigstens eines der angeschlossenen Terminals ein dominantes Bit auf der Arbitrierungsleitung aussendet, und andernfalls einen rezessiven Zustand annimmt. Zu diesem Zweck können als Ausgangsstufen zum Senden des Identifikationsworts auf der Arbitrierungsleitung beispielsweise Offenkollektorschaltungen eingesetzt werden, die sich bei einem Terminal, das kein Identifikationswort sendet oder das ein rezessives Bit sendet, hochohmig verhalten und beim Aussenden eines dominanten Bits eine nichtverschwindende Spannung ausgeben oder niederohmig werden und eine an die Arbitrierungsleitung angelegte Vorspannung gegen Null ziehen.

In der weiteren Beschreibung wird (rein willkürlich) dem dominanten Bit der logische Wert 0 und dem rezessiven Wert der logische Wert 1 zugeordnet. Der Wettbewerb der Terminals um zugriffsrechte auf den Bus läuft in folgender Weise ab: Wenn diejenigen Terminals, die Übertragungsbedarf haben, zu Beginn einer Rahmentaktperiode damit anfangen, ihr Identifikationswort auf der Arbitrierungsleitung 12 auszusenden, so ist das zuerst gesendete Bit das höchstwertige Bit des Prioritätsabschnitts 21.

Bei der oben getroffenen Zuordnung der Zahlenwerte 0 und 1 zum dominanten und rezessiven Zustand entspricht ein niedriger numerischer Wert des Prioritätsabschnitts 21 hoher Priorität des anfordernden Terminals. (Bei umgekehrter Zuordnung entspräche hohe Priorität einem hohen numerischen Wert.)

Falls unter den am Wettbewerb teilnehmenden Terminals eins mit relativ hoher Priorität ist, bei dem das höchstwertige Bit 0 ist, so bestimmt dieses den Zustand der Arbitrierungsleitung. Alle Terminals, die ein Bit mit Wert 1 gesendet haben, erkennen, daß der Zustand der Prioritätsleitung vom von ihnen gesendeten Bit abweicht, und geben den Wettbewerb auf, das heißt sie brechen das Senden ihres Identifikationsworts ab. Ein entsprechender Vorgang wiederholt sich bei jedem weiteren Aussenden eines Bits des Prioritätsabschnitts 21. Infolgedessen sind als Teilnehmer des Wettbewerbs nach dem Senden des Prioritätsabschnitts 21 nur noch diejenigen Terminals übrig, die unter allen ursprünglichen Teilnehmern die höchste Priorität besitzen.

Diese beginnen nun mit dem Aussenden des Fairnessabschnitts 22. Genauso wie beim Senden des Prioritätsabschnitts scheidet jedes Terminal aus dem Wettbewerb aus, das beim Senden eines rezessiven Bits 1 feststellt, daß sich die Arbitrierungsleitung gleichzeitig im dominanten Zustand 0 befindet. Da die Fairnessabschnitte 22 von zwei verschiedenen Terminals den gleichen numerischen Wert haben können, kann es vorkommen, daß auch nach Aussenden dieses Abschnitts sich noch mehrere Terminals im Wettbewerb befinden. Eine eindeutige Entscheidung zwischen diesen wird herbeigeführt durch Aussenden ihrer Adreßabschnitte 23, die die Adresse des betreffenden Terminals innerhalb des Bussystems angeben. Da jede Adresse innerhalb des Bussystems nur einmal vergeben wird, ist sichergestellt, daß nach Aussenden des gesamten Identifikationsworts ein "Gewinner" des Wettbewerbs eindeutig feststeht.

Dieser Gewinner verändert nun den Wert seines Fairnessabschnitts 22, zum Beispiel durch Inkrementieren oder Dekrementieren. Wenn wie hier logisch 0 als dominanter Zustand ausgewählt ist, ist es zweckmäßig, den Wert des Fairnessabschnitts nach jedem gewonnenen Wettbewerb um 1 zu erhöhen. Wenn zwei Terminals mit gleicher Priorität und gleichem Wert des Fairnessabschnitts am Wettbewerb teilnehmen, gewinnt zunächst dasjenige mit der niedrigeren Adresse. Indem dieses nach gewonnenem Wettbewerb seinen Fairnessabschnitt inkrementiert, ist sichergestellt, daß, wenn diese beiden Terminals zu einem späteren Zeitpunkt wieder gemeinsam am Wettbewerb teilnehmen, das andere gewinnt.

Wenn zwei Terminals gleicher Priorität stark unterschiedlichen Übertragungsbedarf haben, eines also wesentlich seltener am Wettbewerb teilnimmt und entsprechend selten Gelegenheit hat, seinen Fairnessabschnitt zu inkrementieren, so kann seine mit zunehmendem Stand des internen Zählers abnehmende Chance, den Wettbewerb zu gewinnen, zu einer merklichen Abnahme der Übertragungsrate des Terminals führen. Erst wenn der Zähler überläuft und auf den Wert 0 zurückkehrt, nimmt die Übertragungsrate wieder zu. Um solche Schwankungen zu vermeiden, ist es insbesondere dann, wenn das Bussystem nicht bis an die Grenze seiner Übertragungskapazität ausgelastet ist, das heißt wenn gelegentlich Rahmenperioden vorkommen, in denen keine Nutzdaten übertragen werden, zweckmäßig, die internen Zähler aller Terminals auf 0 zurückzusetzen. Zu diesem Zweck kann jedes einzelne Terminal immer dann seinen Fairneßabschnitt zurücksetzen, wenn es feststellt, daß während einer bestimmten Zahl von Rahmenperioden keine Zellen übertragen worden sind.

Unter Umständen kann es sich ungünstig auswirken, wenn der Wert des Fairnessabschnitts bei laufend aktiver Arbitrierung von seinem Maximalwert auf 0 zurückspringt. Hierdurch bekommt ein Terminal, das in der Vergangenheit häufig übertragen hat, einen gewissen Vorteil. Es kann sinnvoll sein, jedem Terminal die folgende Funktion zuzuordnen:

Wenn ein Terminal in einem bestimmten Zeitintervall T keinen 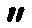 Wettbewerb" gewonnen hat, dekrementiert es seinen Fairnessabschnitt um einen bestimmten Wert N. Die 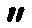 Vorteilsbeschaffung" geschieht hierdurch etwas sanfter; die Zählkurve weist keine Unstetigkeit auf und bewegt sich immer im Bereich 0 bis Maximalwert.

Die Zentraleinheit 3 ist, wie in Figur 1 gezeigt, als Empfänger an die Arbitrierungsleitung 12 angeschlossen und erfährt so anhand des im Identifikationswort 20 übertragenen Adreßabschnitts 23, welches der angeschlossenen Terminals Bedarf hat, Daten auf der Datenleitung 7 zu Übertragen.

Figur 3 zeigt den zeitlichen Ablauf einer Upstream-Übertragung eines Datenpakets von einem Port 4 eines Terminals an den Zellprozessor 32 der Zentraleinheit 3. Zwischen einzelnen Baugruppen des Bussystems übertragene Signale sind von oben nach unten in dem Diagramm in zeitlicher Reihenfolge eingetragen, sie sind jeweils Zeitschlitzen n-1 bis n+4 zugeordnet, die eine oder mehrere Perioden des Rahmentaktsignals umfassen können. Im Zeitschlitz n-1 meldet der Port 4 dem Bus Client 13 seines Terminals, daß er auf seiner externen Leitung eine ATM-Zelle empfangen hat (Pfeil 33). Im nachfolgenden Zeitschlitz n beginnt der Bus Client 13, diese Zelle zu lesen und in einen eigenen, dem Port 4 zugeordneten Puffer zu übertragen (Pfeil 34) und gleichzeitig sein Identifikationswort auf der Arbitrierungsleitung auszusenden (Pfeil 35). Dieser Versuch scheitert bei diesem Beispiel in den Zeitschlitzen n und n+1 und ist erfolgreich im Zeitschlitz n+2. Das erfolgreiche Aussenden des Identifikationsworts beinhaltet die Übermittlung der Adresse des Terminals an den Arbiter 31 der Zentraleinheit (Pfeil 36).

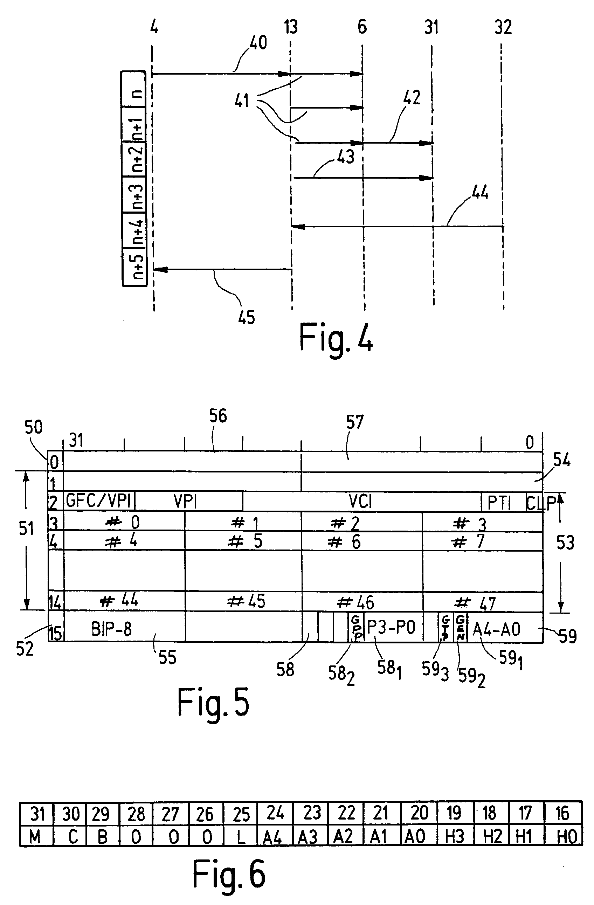

Im folgenden Zeitschlitz n+3 überträgt der Bus 13 an den Arbiter 31 eine Bedienanforderung 37, in der dem Arbiter die Adresse des Ports 4 und die gewünschte Übertragungsart (Upstream oder Downstream) mitgeteilt wird. Nach Erhalt einer Genehmigung 38 vom Arbiter 31 beginnt der Bus Client 13 mit dem Senden der ATM-Zelle auf dem Bus 6. Die Übertragung der Bedienanforderung 37, der Genehmigung 38 und der Zelle 39 erfolgen auf den Paketdatenleitungen 7 unter Verwendung eines Paketformats, das nachfolgend mit Bezug auf Figur 5 erläutert wird.

Das Diagramm von Figur 4 ist in der gleichen Weise aufgebaut wie das der Figur 3 und zeigt die Vorgänge, die sich zwischen Port 4, Bus Client 13, Bus 6, Arbiter 31 und Zellprozessor 32 bei der Downstream-Übertragung abspielen. In einem Zeitschlitz n meldet der Port 4 an den Bus 13, daß sein Sendepuffer in der Lage ist, eine ATM-Zelle aufzunehmen (Pfeil 40). Der Bus Client 13 versucht daraufhin mehrmals (Pfeile 41), sein Identifikationswort auszusenden, was ihm bei diesem Beispiel beim dritten Versuch gelingt (Pfeil 42). Eine Bedienanforderung 43 wird vom Bus Client 13 an den Arbiter 31 übertragen und mit dem Senden 44 einer Zelle vom Zellprozessor 32 beantwortet. Diese Zelle wird vom Bus Client 13 gepuffert und nach Auswertung einer Adreßangabe durch den Bus Client 13 in den Port 4 weitergeschrieben.

Figur 5 zeigt das Format von Datenpaketen, die auf den Datenleitungen 7 des Busses 6 Übertragen werden. Das hier betrachtete Bussystem hat 32 parallele Paketdatenleitungen, auf denen Datenwörter von 32 Bit Länge parallel übertragen werden. Jedes Paket umfaßt 16 solche Datenwörter. Die ersten und letzten Datenwörter 50 beziehungsweise 52 eines solchen Pakets sind der Übertragung von Steuerinformationen zwischen den Terminals 1,2 und der Zentraleinheit 3 des Bussystems vorbehalten. Sie umschließen einen Zellkörper 51 von 14 Datenwörtern Länge, der aus einer ATM-Zelle 53 und einem der ATM-Zelle 53 vorangehenden Datenwort 54 besteht, das Routing-Informationen für die betreffende ATM-Zelle 53 enthält.

Der Aufbau einer ATM-Zelle aus den Steuerfeldern Generic Flow Control (GC), Virtual Path Identifier (VPI), Virtual Channel Identifier (VCI), Payload Type Identifier (PTI) und Cell Loss Priority Bit (CLP), Header Error Control (HEC) und 48 Oktetts Nutzdaten sowie die Funktion der einzelnen Felder ist zum Beispiel aus Georg, Telekommunikationstechnik, Springer Verlag 1996 bekannt und braucht hier nicht weiter beschrieben zu werden. Die ATM-Zelle 53 weicht von der üblichen Form dadurch ab, daß ihr das HEC-Oktett fehlt. Das HEC-Oktett dient im wesentlichen dazu, innerhalb der Transmission-Convergence-Schicht (TC-Layer) in einem seriellen Bitstrom die Zellgrenzen zu finden. Diese Funktion entfällt für den Zellbus; das HEC-Oktett braucht deshalb auch nicht übertragen zu werden. Im letzten Datenwort 52 ist ein Oktett 55 vorgesehen, das eine Prüfsumme über den gesamten Zellkörper 51 einschließlich der Steuerfelder enthält.

Das erste Datenwort 50 des Pakets enthält eine Bedienanforderung, die an die Zentraleinheit 3 von demjenigen Terminal gesendet wird, das während der vorhergehenden Rahmentaktperiode den Wettbewerb gewonnen hat. Die Bedienanforderung besteht aus zwei Teilen, einer Sendeanforderung 56 und einer Empfangsanforderung 57 von jeweils 16 Bit Breite. Jedes Bit der Sendeanforderung 56 beziehungsweise der Empfangsanforderung 57 ist einem von maximal 16 Ports des anfordernden Terminals zugeordnet, und sein Status 0 oder 1 gibt an, ob der betreffende Port Daten auf dem Bus 6 zu senden und von diesem zu empfangen hat. Es können jeweils in der Sendeanforderung und der Empfangsanforderung mehrere Bits gleichzeitig gesetzt sein, um anzuzeigen, daß mehrere Ports des Terminals Übertragungsbedarf haben. Falls ein Terminal mehrere Male nacheinander den Wettbewerb verliert, kann es vorkommen, daß in dieser Zeit weitere Ports des gleichen Terminals Übertragungsbedarf bekommen. Wenn das Terminal den Wettbewerb gewonnen hat, kann es durch Setzen der entsprechenden Bits in Sende- und/oder Empfangsanforderung den Übertragungsbedarf aller Ports gleichzeitig der Zentraleinheit 3 melden.

Der auf das erste Datenwort 50 folgende Zellkörper 51 sowie das Prüfsummenoktett 55 werden entweder von demjenigen Terminal, das in der vorhergehenden Rahmentaktperiode eine Sendegenehmigung erhalten hat, oder vom Zellprozessor 31 gesendet. Bei der Übertragung von einem Terminal 1,2 an den Zellprozessor 31 der Zentraleinheit 3 ist der Inhalt des Routing-Datenworts 54 ohne Bedeutung. Bei der Übertragung der ATM-Zelle 53 vom Zellprozessor 32 an einen Port spezifiziert das Routing-Datenwort 54 das Terminal und den Port innerhalb eines Terminals, an den die ATM- Zelle adressiert ist. Es hat somit die Funktion einer Empfangsgenehmigung für das adressierte Terminal beziehungsweise den adressierten Port. Figur 6 zeigt detailliert den Aufbau der als Cellbus Routing Header bezeichneten höherwertigen 16 Bits des Routing-Datenworts 54. Das Bit M gibt an, ob die nachfolgende ATM-Zelle 53 eine Multicastzelle, also eine an mehrere Terminals und/oder Ports gleichzeitig adressierte Zelle einerseits oder eine Zelle mit eindeutiger Adresse oder eine Broadcastzelle andererseits handelt. Das Bit C spezifiziert, ob die Zelle Nutzdaten oder Steuerdaten enthält, die zum Beispiel innerhalb des Bussystems versendet werden, um Ports oder Terminals zu konfigurieren. Das Bit B differenziert zwischen Broadcastzellen einerseits und Multicastzellen oder solchen mit eindeutiger Adresse andererseits. Mit Hilfe von fünf Adreßbits A4 bis A0 ist die Steuereinheit in der Lage, eines unter 32 Terminals - entsprechend den UTOPIA Konventionen zu adressieren. Die niederwertigsten Bits H3 bis H0 enthalten eine über die anderen Bits des Routing Headers gebildete Prüfsumme. Die niedrigerwertigen 16 Bits des Routing-Datenworts 54, als Tandem-Routing-Header bezeichnet, geben numerisch, das heißt binär codiert, den Index des Ports 4 des im Cellbus Routing Header bezeichneten Terminals an, das die Zelle erhalten soll. Das Bussystem ist so, obwohl vollständig in der physikalischen Ebene des ATM-Protokollmodells angesiedelt, in der Lage, Funktionen wie Broadcast und Multicast zu unterstutzen.

Zwei Oktetts 58,59 des letzten Datenworts des Pakets dienen der Zentraleinheit 3 zum Erteilen von Sendegenehmigungen. Zu diesem Zweck umfaßt das Oktett 58 vier Bits 58₁, die den Index desjenigen Ports innerhalb eines Terminals angeben, dem die Zentraleinheit die Sendegenehmigung erteilt, und ein Prüfbit 58₂, dessen Status entsprechend der Parität der vier Bits 58₁ gesetzt wird und das es einem Terminal, das die Genehmigung empfängt, ermöglicht, Übertragungsfehler zu erkennen.

Das zweite Oktett 59 umfaßt ein Steuerbit 59₂ dessen Zustand angibt, ob eine Sendegenehmigung vergeben wird oder nicht (eine solche Genehmigung wird insbesondere nicht vergeben, wenn die Steuereinheit 3 in der folgenden Rahmenperiode selbst eine Zelle sendet, fünf Bits 59₁, die die Adresse desjenigen Terminals innerhalb des Bussystems angeben, an das eine Genehmigung vergeben wird, und ein Prüfbit 59₃, dessen Zustand analog zu dem des Prüfbits 58₂ anhand der Parität der Terminaladresse festgelegt wird und die Erkennung von Fehlern bei der Übertragung der Terminaladresse ermöglicht.

Bei Verwendung des in Figur 5 gezeigten Paketformats erlaubt das Bussystem die selektive Adressierung von bis zu 32 Terminals und, innerhalb der Terminals, von bis zu jeweils 16 Ports. Somit können insgesamt bis zu 512 verschiedene Datenquellen und -senken verwaltet werden, ohne daß hierfür eine zeitaufwendige Einzelabfrage der verschiedenen Quellen beziehungsweise Senken nach ihrem Übertragungsbedarf erforderlich ist.

Eine Erweiterung des Bussystems ist ohne weiteres möglich, zum Beispiel durch Verwendung einer größeren Zahl von parallelen Paketdatenleitungen und eine entsprechend größere Breite des die Bedienanforderung enthaltenden Datenworts 50, oder durch Übertragen der Sendeanforderung 56 und der Empfangsanforderung 57 nacheinander in zwei Datenwörtern, so daß für jeden der zwei Typen von Anforderung die gesamte Breite des Paketdatenbusses 7 zur Verfügung steht. Auch die Verwendung einer größeren Bitzahl zur Darstellung des Index eines Ports ist ohne weiteres möglich.

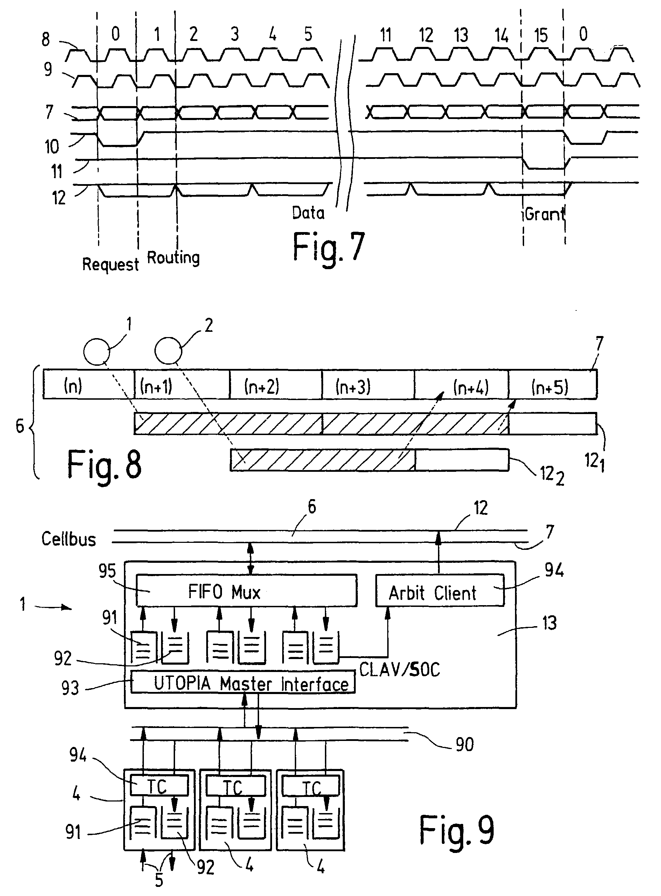

Figur 7 veranschaulicht das zeitliche Zusammenspiel von Signalen auf den verschiedenen Leitungen des Bussystems. In diesem Diagramm erstreckt sich die Zeitachse von links nach rechts und ist in mit von 0 bis 15 numerierte Zeitintervalle unterteilt, die jeweils einem der 16 Datenwörter des in Figur 6 dargestellten Paketformats zugeordnet sind. Sende- und Empfangstaktsignale auf den Leitungen 8,9 oszillieren mit einer Periode, dessen Dauer jeweils der Dauer eines Zeitintervalls entspricht. Sie sind phasenversetzt, um zu gewährleisten, daß ein Empfänger ein Datenwort erst dann von den Datenleitungen 7 liest, wenn diese einen stationären Pegel angenommen haben.

Ein Puls mit einer Dauer von einem Zeitintervall auf der Rahmentaktsignalleitung 10 kennzeichnet jeweils den Beginn eines Übertragungsrahmens. Mit Beginn des Rahmens fangen die Terminals, die Übertragungsbedarf haben, an, ihre Identifikationswörter auf der Arbitrierungsleitung 12 zu senden. Wie die entsprechende Zeile in Figur 7 zeigt, dauert die Übertragung eines Bits des Identifikationsworts jeweils zwei Zeitintervalle. Der Grund dafür ist, daß die Arbitrierungsleitung 12 länger als eine der Paketdatenleitungen 7 benötigt, um einen stationären Wert zu erreichen, und daß ein Terminal, das ein Bit auf der Arbitrierungsleitung 12 aussendet, Zeit benötigt, um den Zustand der Arbitrierungsleitung 12 mit dem von ihm ausgesendeten Bit zu vergleichen und zu entscheiden, ob es das Aussenden fortsetzt oder nicht. Dies hat bei dem hier beispielhaft betrachteten Bussystem die Folge, daß während einer Rahmensignalperiode nur acht der 16 Bits eines Identifikationsworts ausgesendet werden können. Da es aber in jeder Rahmenperiode möglich sein soll, eine Bedienanforderung an die Zentraleinheit 3 zu richten, besitzt das Bussystem zwei Arbitrierungsleitungen 12, auf denen die Arbitrierungswörter zeitversetzt ausgesendet werden können. Dies ist in Figur 8 deutlicher gezeigt, in der die zwei Arbitrierungsleitungen als horizontale Balken 12₁,12₂ dargestellt sind. Der oberste der horizontalen Balken in der Figur stellt die Paketdatenleitungen 7 dar, wobei jedes einzelne Kästchen des Balkens für eine Rahmenperiode beziehungsweise ein innerhalb einer Rahmenperiode übertragenes Datenpaket steht. 1 und 2 sind zwei verschiedene Terminals des Bussystems. Während der Rahmenperiode n stellt das Terminal 1 fest, daß einer seiner Ports Übertragungsbedarf hat. Das Terminal beginnt somit mit Anfang der nächstfolgenden Rahmenperiode n+1, sein Identifikationswort zu senden. Das zweite Terminal 2, das in dieser Rahmenperiode Übertragungsbedarf feststellt, beginnt in der Rahmenperiode n+2, sein Identifikationswort zu senden und benutzt hierfür, da auf der Arbitrierungsleitung 12₁ bereits der Wettbewerb zwischen dem Terminal 1 und anderen Terminals stattfindet, die andere Arbitrierungsleitung 12₂. Der erste Versuch des Terminals 2, sein Identifikationswort zu senden, schlägt fehl, es beginnt daher in der Rahmenperiode n+3 einen zweiten Versuch. Währenddessen ist das Terminal 2 im ersten Versuch erfolgreich und überträgt seine Bedienanforderung im ersten Datenwort des Rahmens n+4. Im letzten Datenwort dieses Rahmens erhält es eine Sendegenehmigung; gleichzeitig gelingt es dem Terminal 1, sein Identifikationswort vollständig auszusenden. Im nächsten Rahmen n+5 sendet somit das Terminal 1 seine Bedienanforderung auf den Paketdatenleitungen 7, direkt anschließend sendet das Terminal 2 eine ATM-Zelle, und am Ende der Rahmenperiode erhält das Terminal 1 eine Sendegenehmigung.

Es ist ohne weiteres möglich, zur Übertragung der Identifikationswörter auch eine größere Zahl von Arbitrierungsleitungen als zwei im zyklischen Wechsel einzusetzen. Dies kann insbesondere der Fall sein, wenn in einem System mit einer großen Zahl von Terminals längere Identifikationswörter als im hier betrachteten Fall übertragen werden müssen, oder wenn bei Verwendung einer größeren Zahl von parallelen Paketdatenleitungen 7 die zur Übertragung eines Pakets erforderliche Zahl von Schreib-Lesezyklen und damit die Rahmenperiode abnimmt.

Figur 9 zeigt ein Beispiel für den inneren Aufbau eines Terminals des erfindungsgemäßen Bussystems. Das Terminal 1 umfaßt einen Bus Client 13, der mit mehreren zugeordneten Ports 4 über einen zweiten Bus 90 kommuniziert. Bei diesem zweiten Bus handelt es sich uni einen UTOPIA-Bus. Jeder Port 4 verfügt über Eingangs- und Ausgangspuffer 91 beziehungsweise 92 zum Empfangen beziehungsweise Senden von ATM-Zellen auf einer externen Leitung 5. Eine UTOPIA-Masterschnittstelle 93 fragt über den Bus 90 entsprechende Slave-Schnittstellen 94 der Ports 4 ab, ob dort Sende- oder Übertragungsbedarf vorliegt und überträgt gegebenenfalls von außen eingegangene Zellen aus dem Empfangspuffer 91 des Ports 4 in einen dem Port zugeordneten Empfangspuffer 91 des Bus Client 13 beziehungsweise liefert an den Sendepuffer 92 des Ports 4 Zellen aus einem zugeordneten Sendepuffer 92 des Bus Client 13.

Eine Ausgangsstufe 94 des Bus Client überwacht den Datenbestand in den Puffern 91,92 und übernimmt das Aussenden des Identifikationsworts und gegebenenfalls das Senden der Bedienanforderung an die Zentraleinheit 13, wenn Übertragungsbedarf festgestellt wird. Ein Multiplexer 95 überwacht die Paketdatenleitung 7 des Busses 6. Er wertet darauf übertragene Sendegenehmigungen aus und gibt, wenn die in der Genehmigung enthaltene Adresse einen der ihm zugeordneten Ports spezifiziert, eine Zelle ans dem zugeordneten Empfangspuffer 91 auf die Paketdatenleitungen 7 aus. Ferner wertet der Multiplexer 95 auf den Datenleitungen übertragene Routing-Datenwörter darauf aus, ob sie eine Empfangsgenehmigung für das Terminal beziehungsweise seine Ports enthalten, und überträgt gegebenenfalls eine ATM- Zelle von den Datenleitungen 7 in einen Sendepuffer 92.

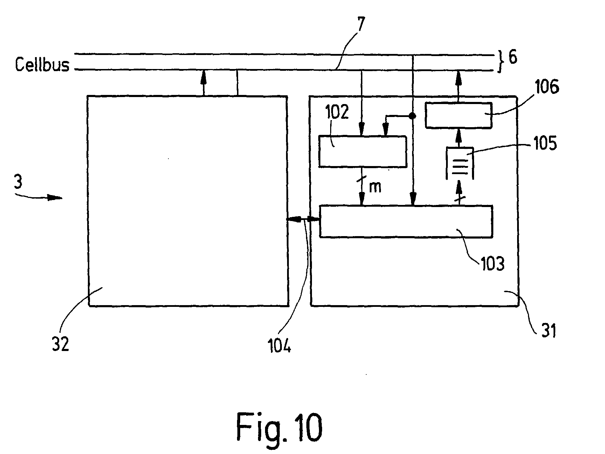

Figur 10 zeigt beispielhaft den Aufbau einer Zentraleinheit 3 des Bussystems. Diese Zentraleinheit kann funktionsmäßig in zwei Komponenten aufgegliedert werden, den Zellprozessor 32, der ATM-Zellen über die Paketdatenleitungen 7 des Busses 6 empfängt, darin enthaltene Adreßangaben auswertet und die Zellen, gegebenenfalls mit geänderten Adreßinformationen für ihren Weitertransport zu einem fernen Empfänger über einen externe Leitung eines Ports ausgestattet, wieder auf den Bus 6 ausgibt. Zweiter wesentlicher Bestandteil ist ein Bus-Arbiter 31, der in Abhängigkeit von Bedienanforderungen der an den Bus 6 angeschlossenen Terminals 1,2 oder des Zellprozessors 32 diesen jeweils Rahmenperioden zum Senden beziehungsweise Empfangen von Zellen zuweist. Dieser Arbiter 31 enthält eine Anforderungsmaske 102, die ein Register umfaßt, dessen Bitzahl beziehungsweise Breite wenigstens dem Zweifachen der Zahl der an das Bussystem angeschlossenen Ports entspricht. Ein Steuerungsteil der Anforderungsmaske 102 entnimmt aus einem auf einer der Arbitrierungsleitungen 12 ausgesendeten Identifikationswort die Adresse des aussendenden Terminals und aus dem in der darauffolgenden Rahmenperiode übertragenen Datenpaket die Indizes derjenigen Ports des Terminals, die Sende- oder Empfangsbedarf haben, und setzt jeweils diesen Ports entsprechende Bits im Register der Anforderungsmaske. Jedes dieser Bits ist über eine eigene Leitung mit einer Verwaltungsschaltung 103 verbunden, die in Abhängigkeit vom Zustand dieser Bits Sendegenehmigungen für die Terminals oder den Zellprozessor 32 erzeugt. Sendegenehmigungen an den Zellprozessor 32 werden im hier gezeigten Beispiel über eine Leitung 104 direkt an den Zellprozessor 32 weitergegeben, der diese in einem Wartepuffer zwischenspeichert, falls er sie nicht sofort bearbeiten kann; im Falle einer Sendegenehmigung für ein Terminal beziehungsweise einen Port ermittelt die Verwaltungsschaltung 103 zunächst anhand einer (in der Figur nicht gezeigten) Tabelle die Prioritätsstufe des betreffenden Terminals beziehungsweise Ports und trägt die Genehmigung jeweils entsprechend seiner Prioritätsstufe in einen von mehreren Wartepuffern 105 ein. Die Zahl dieser Wartepuffer 105 entspricht zweckmäßigerweise der Zahl der Prioritätsstufen. Eine Scheduler-Schaltung 106 entnimmt die Genehmigungen nach einem vorbestimmten Schlüssel den einzelnen Wartepuffern 105 und gibt sie mit der passenden Zeitlage innerhalb einer Rahmenperiode auf die Paketdatenleitungen 7 aus. Der Schlüssel, nach dem der Scheduler 106 vorgeht, kann je nach Anwendungsbedingungen des Bussystems unterschiedlich sein. Beispielsweise kann jeder Prioritätsstufe ein bestimmter Prozentsatz an Übertragungsrahmen zugewiesen sein, oder der Scheduler kann solange ausschließlich Genehmigungen der höchsten Priorität auf den Bus ausgeben, wie der entsprechende Wartepuffer nicht leer ist, und erst bei leerem Wartepuffer Genehmigungen einer geringeren Prioritätsstufe ausgeben. Es kann zweckmäßig sein, in Abhängigkeit vorn Datenaufkommen auf dem Bussystem zwischen diesen zwei Schlüsseln oder anderen zu wechseln. Des weiteren kommuniziert der Scheduler 106 mit der Verwaltungsschaltung 103, um sicherzustellen, daß während einer Rahmenperiode, in der der Zellprozessor 32 eine Zelle sendet, keine Sendegenehmigung an ein Terminal ausgegeben wird.

## Patentansprüche

1. Verfahren zum Verwalten des Zugriffs mehrerer konkurrierender Sender- und oder Empfänger-Terminals (1,2) auf einen Bus (6) mit den Schritten:
a) durch jedes der Terminals, das Daten auf dem Bus zu senden oder vom Bus zu empfangen hat, Aussenden des ersten Bits eines Identifikationsworts (20), das für das betreffende Terminal (1,2) charakteristisch ist, auf einer Arbitrierungsleitung (12), wobei das ausgesendete Bit einen dominanten oder einen rezessiven Wert haben kann;
b) wenn das ausgesendete Bit den rezessiven Wert hat und die Arbitrierungsleitung (12) während des Sendens den dominanten Wert annimmt, Abbrechen des Aussendens des Identifikationsworts, sonst Aussenden des nächsten Bits des Identifikationsworts;
c) Wiederholen von Schritt b), bis das Aussenden abgebrochen wird oder das Identifikationswort (20) vollständig ausgesendet ist;
d) Übertragen einer Zelle (53) über den Bus (6) von oder zu dem Terminal (1,2), nachdem dieses das Identifikationswort vollständig ausgesendet hat.

2. Verfahren nach Anspruch 1, bei dem festgestellt wird, daß ein Terminal (1,2) Daten auf dem Bus (6) zu senden oder vom Bus (6) zu empfangen hat, wenn es von einer externen Datenleitung (5) eine Zelle empfangen hat, oder wenn ein Sendepuffer (92) des Terminals, der zum Senden von Daten auf der externen Datenleitung (5) dient, in der Lage ist, eine Zelle aufzunehmen.

3. Verfahren nach Anspruch 1 oder 2, bei dem das Terminal (1) nach dem vollständigen Aussenden des Identifikationsworts (20) eine Bedienanforderung (50) an eine Zentraleinheit (3) sendet und vor dem Senden oder Empfangen einer Zelle (53) den Empfang einer Sendegenehmigung (58,59) beziehungsweise einer Empfangsgenehmigung (54) von der Zentraleinheit abwartet.

4. Verfahren nach Anspruch 3, bei dem einem Terminal (1) ein oder mehrere Ports (4) angehören, und die Bedienanforderung (50) wenigstens einen Port (4) des Terminals (1) spezifiziert, der Quelle beziehungsweise Senke der auf dem Bus (6) zu übertragenden Daten ist und die Sendebeziehungsweise Empfangsgenehmigung (58,59;54) einen der spezifizierten Ports (4), von dem Daten auf den Bus gesendet werden sollen, oder wenigstens einen der spezifizierten Ports (4), der Daten vom Bus (6) empfangen soll, angibt.

5. Verfahren nach Anspruch 4, bei dem jedem Port (4) des Terminals (1) ein Bit der Bedienanforderung (50) zugeordnet ist und durch den Status des Bits spezifiziert wird, ob der Port Quelle oder Senke sein soll oder nicht.

6. Verfahren nach Anspruch 4 oder 5, bei dem jedem Port (4) des Terminals (1) eine Nummer (58₁) zugeordnet ist und durch Übertragen der Nummer (58₁) in der Sendegenehmigung (58) oder der Empfangsgenehmigung (54) angegeben wird, ob der Port Quelle beziehungsweise Senke sein soll oder nicht.

7. Verfahren nach einem der vorhergehenden Ansprüche, wobei ein Rabmentaktsignal erzeugt wird und jede Zelle innerhalb einer Periode des Rahmentaktsignals übertragen wird.

8. Verfahren nach Anspruch 7, bei dem ein Terminal (1,2), das in Schritt c) das Senden seines Identifikationsworts (20) abgebrochen hat, in einer folgenden Periode des Rahmentaktsignals einen erneuten Sendeversuch unternimmt.

9. Verfahren nach Anspruch 7 oder 8, bei dem jeder Periode des Rahmentaktsignals eine von i Arbitrierungsleitungen (12₁,12₂) zum Aussenden der Identifikationswärter (20) zyklisch zugeordnet wird, wobei i eine ganze Zahl und wenigstens 2 ist.

10. Verfahren nach Anspruch 8, bei dem i die Zahl der zum Senden eines Identifikationsworts (20) benötigten Rahmentaktperioden ist.

11. Verfahren nach einem der vorhergehenden Ansprüche, wobei das Identifikationswort (20) einen Abschnitt (21) umfaßt, der die Priorität des Terminals angibt.

12. Verfahren nach Anspruch 10, wobei der die Priorität angebende Abschnitt (21) beim Aussenden des Identifikationsworts (20) zuerst übertragen wird.

13. Verfahren nach einem der vorhergehenden Ansprüche, wobei das Identifikationswort (20) einen Fairnessabschnitt (22) umfaßt, dessen Wert mit dem Übertragen einer Zelle verändert, insbesondere inkrementiert wird.

14. Verfahren nach Anspruch 13, bei dem der Fairnessabschnitt (22) aller Terminals auf einen Anfangswert gesetzt wird, wenn während einer festgelegten Zeit keine Zellen auf dem Bus übertragen worden sind.

15. Verfahren nach einem der vorhergehenden Ansprüche, wobei das Identifikationswort (20) einen Abschnitt (23) umfaßt, der die Adresse des Terminals angibt.

16. Verfahren nach Anspruch 15, wobei der die Adresse angebende Abschnitt (23) beim Aussenden des Identifikationsworts (20) zuletzt übertragen wird.

17. Bussystem für die Paketdatenübertragung mit wenigstens einer Paketdatenleitung (7), wenigstens einer Arbitrierungsleitung (12) und einer Mehrzahl von Terminals (1,2), die an wenigstens eine der Paketdatenleitungen (7) zum Senden und/oder Empfangen von Datenpaketen und an die wenigstens eine Arbitrierungsleitung (12) zum seriellen Aussenden eines Identifikationsworts (20), das für das betreffende Terminal (1,2) charakteristisch ist, angeschlossen sind, wobei die Terminals einen dominanten Zustand der Arbitrierungsleitung (12) herbeiführen, wenn wenigstens eines der Terminals (1,2) ein dominantes Bit aussendet, und einen rezessiven Zustand herbeiführen, wenn jedes Terminal (1,2) ein rezessives Bit aussendet, und jedes Terminal (1,2) eingerichtet ist, um nur dann ein Datenpaket zu senden und/oder zu empfangen, wenn alle Bits seines Identifikationsworts (20) ausgesendet worden sind, ohne daß beim Aussenden eines rezessiven Bits ein dominanter Zustand der Arbitrierungsleitung (12) aufgetreten ist.

18. Bussystem nach Anspruch 17 mit einer Zentraleinheit (3), die an die Paketdatenleitung (7) angeschlossen ist, um von einem Terminal (1,2) gesendete Bedienanforderungen (50) zu empfangen und Sende- beziehungsweise Empfangsgenehmigungen an das Terminal (1,2) zu vergeben.

19. Bussystem nach Anspruch 18, bei dem die Zentraleinheit einen Wartepuffer (105) zum Speichern von unbeantworteten Sende-Bedienanforderungen besitzt.

20. Bussystem nach Anspruch 19, bei dem der jeweils eine Wartepuffer (105) verschiedenen Prioritätsstufen von Bedienanforderungen zugeordnet ist.

21. Bussystem nach Anspruch 18, bei dem die Zentraleinheit eine Anforderungsmaske (102) mit einem Register umfaßt, dessen Bits jeweils einem Port des Bussystems zugeordnet sind und entsprechend dem Übertragungsbedarf des zugeordneten Ports gesetzt werden.

22. Bussystem nach einem der Ansprüche 17 bis 21 mit einer an die Terminals (1,2) angeschlossenen Rahmensignalleitung (10), wobei ein auf der Rahmensignalleitung (10) übertragenes Rahmensignal Anfang und/oder Ende eines Zeitrahmens festlegt, innerhalb dessen eine Zelle auf der Paketdatenleitung (7) übertragbar ist.

23. Bussystem nach Anspruch 22 mit i Arbitrierungsleitungen (12), wobei i die Zahl der zum Senden eines Identifikationsworts (20) benötigten Rahmentaktperioden ist.

24. Bussystem nach einem der Ansprüche 17 bis 23, bei dem das Identifikationswort (20) einen Abschnitt (21), der die Priorität des es aussendenden Terminals (1,2) angibt, und/oder einen Abschnitt (22), dessen Wert mit dem Übertragen einer Zelle inkrementiert, insbesondere verändert wird, und/oder einen Abschnitt (23), der die Adresse des es aussendenden Terminals (1,2) angibt, umfaßt.
